(19) **Europäisches Patentamt European Patent Office Office européen des brevets**

(11) **EP 3 340 127 B1**

(12) **EUROPEAN PATENT SPECIFICATION**

(45) Date of publication and mention of the grant of the patent:
**01.09.2021 Bulletin 2021/35**

(51) Int Cl.:
**G06N 3/063** *(2006.01)*        **G06N 3/04** *(2006.01)*
**G06N 3/08** *(2006.01)*

(21) Application number: **17202652.8**

(22) Date of filing: **20.11.2017**

(54) **MULTI-COMPARTMENT DENDRITES IN NEUROMORPHIC COMPUTING**

MEHRKAMMERDENDRITE IN NEUROMORPHISCHER DATENVERARBEITUNG

DENDRITES À COMPARTIMENTS MULTIPLES DANS DES CALCULS NEUROMORPHIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2016 US 201615385038**

(43) Date of publication of application:
**27.06.2018 Bulletin 2018/26**

(73) Proprietor: **INTEL Corporation
Santa Clara, CA 95054 (US)**

(72) Inventor: **DAVIES, Michael I
Portland, OR Oregon 97205 (US)**

(74) Representative: **Samson & Partner Patentanwälte mbB
Widenmayerstraße 6
80538 München (DE)**

(56) References cited:
**US-A1- 2014 351 190**

- **RAST A D ET AL: "The Leaky Integrate-and-Fire neuron: A platform for synaptic model exploration on the SpiNNaker chip", NEURAL NETWORKS (IJCNN), THE 2010 INTERNATIONAL JOINT CONFERENCE ON, IEEE, PISCATAWAY, NJ, USA, 18 July 2010 (2010-07-18), pages 1-8, XP031771398, ISBN: 978-1-4244-6916-1**

**Description**

TECHNICAL FIELD

The present disclosure relates to devices and methods for operating a neuromorphic processor of a neuromorphic computing system comprised of neuromorphic cores.

BACKGROUND

A neuromorphic processor is a processor that is structured to mimic certain aspects of the brain and its underlying architecture, particularly its neurons and the interconnections between the neurons, although such a processor may deviate from its biological counterpart. A neuromorphic processor may be comprised of many neuromorphic (neural network) cores that are interconnected via a bus and routers which directs communications between the cores. This network of cores may communicate via short packetized spike messages sent from core to core. Each core may implement some number of primitive nonlinear temporal computing elements (neurons). When a neuron's activation exceeds some threshold level, it may generate a spike message that is propagated to a fixed set of fan-out neurons contained in destination cores. The network then may distribute the spike messages to all destination neurons, and in response, those neurons update their activations in a transient, time dependent manner.

It is desirable to create an efficient and fast neuromorphic processor that borrows from the biological model where practical, but deviates from the biological model when it is advantageous to do so.

Rast et al, "The Leaky Integrate-and-Fire Neuron: A Platform for Synaptic Model Exploration on the SpiNNaker Chip", IEEE, 2010 International Joint Conference on Neural Networks (IJCNN) - Barcelona, Spain (2010.07.18-2010.07.23), describes a platform for synaptic model exploration.

BRIEF DESCRIPTION OF THE DRAWINGS

FIG. 1A is a high-level block diagram of a model neural core structure;

FIG. 1B is a pictorial diagram that illustrates one configuration of a multi-compartment neurons and a dendritic accumulation process;

FIG. 1C is a pictorial diagram that shows a state structure of multiple compartments;

FIG. 2A is a block diagram illustrating state dynamics for a dendritic compartment according to a simple neuron model;

FIG. 2B is a block diagram illustrating state dynamics and the dendritic accumulation process for a dendritic compartment according to a multi-compartment neuron model;

FIG. 2C is a block diagram that illustrates an E/I neuron;

FIG. 3A is a pictorial diagram of a structural models that may be used for a dendritic compartment;

FIG. 3B is a pictorial diagram illustrating the inputs and outputs of a dendritic compartment;

FIGS. 3C and 3D are pictorial diagrams of dendritic trees;

FIG. 4 is a flowchart illustrating a method for processing a dendritic compartment; and

FIG. 5 is a block diagram illustrating a machine or system within which a neuromorphic core may be used.

DETAILED DESCRIPTION

The following describes a system and method in which compartment configuration is programmed such that the same basic sequential processor circuit implementation may be used for a very wide variety of neural computational models, providing a highly efficient solution. This system may leverage a sequential state processing mechanism inherent in an efficient silicon neuromorphic implementation to transport information from one neural unit to the next in the same way that dendritic compartments transport current/voltage information to their neighbor(s).

An extension of this architecture is disclosed in a concurrently-filed patent application by Applicant, titled "SCALABLE NEUROMORPHIC CORE WITH SHARED SYNAPTIC MEMORY AND VARIABLE PRECISION SYNAPTIC MEMORY" and identified by docket identifier 884.Z67US1.

As used herein, references to "neural network" for at least some examples is specifically meant to refer to a "spiking neural network"; thus, many references herein to a "neuron" are meant to refer to an artificial neuron in a spiking neural network. It will be understood, however, that certain of the following examples may also apply to other forms of artificial neural networks.

In an example of a spiking neural network, activation functions occur via spike trains, which means that time is a factor that has to be considered. Further, in a spiking neural network, each neuron is modeled after a biological neuron, as the artificial neuron receives its inputs via synaptic connections to one or more "dendrites" (part of the physical structure of a biological neuron), and the inputs affect an internal membrane potential of the artificial neuron "soma" (cell body). In a spiking neural network, the artificial neuron "fires" (e.g., produces an output spike), when its membrane potential crosses a firing threshold. Thus, the effect of inputs on a spiking neural network neuron operate to increase or decrease its internal membrane potential, making the neuron more or less likely to fire. Further, in a spiking neural network, input connections may be stimulatory or inhibitory. A neuron's membrane potential may also be affected by changes in the neuron's own internal state ("leakage").

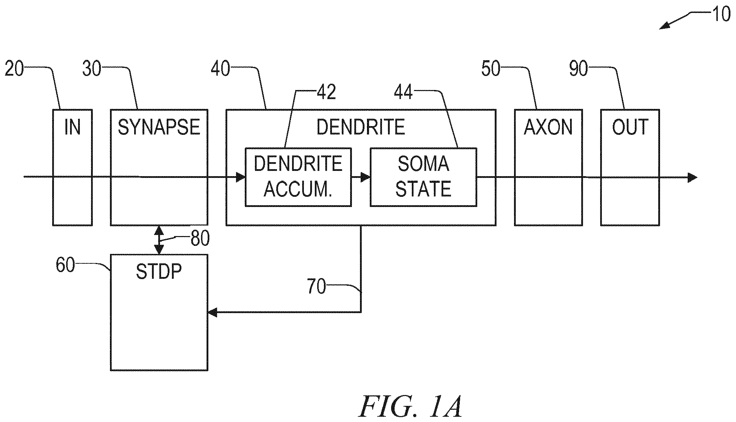

FIG. 1A is a high-level block diagram of a model neural core structure 10 that loosely models a biological neural structure. An action potential, or spike, signal is provided at an input 20 to the synapse 30 (this is actually a fan-out within the core to other dendrite structures with appropriate weight and delay offsets) and, after processing, is provided to a dendrite structure 40 comprising a dendrite accumulator 42 and a soma state store 44. When the soma enters a sufficiently activated state, it may produce new spikes that the dendrite structure 40 outputs to an axon (Y50) (this is actually a fan-out of the spike within the core to other destination cores) for subsequent output 90. Not shown is a routing network of some form that distributes the spikes, in the form of individually addressed data packets, to the appropriate destination cores in a larger system. The outputs core or set of cores will commonly include the core that produced each spike.

The system also permits backwards processing. In biology, when the soma spikes, in addition to that spike propagating downstream to the output neurons, the spike also propagates backwards down through a dendritic tree, which is beneficial for learning. The synaptic plasticity at the synapses is a function of when the postsynaptic neuron fires and when the presynaptic neuron fires. Each synapse self-adjusts its parameters based on the correlations in activity between its input and output neurons, as indicated by their spike times. In a multi compartment architecture, once the soma fires, there are other elements that need to know that the neuron fired in order to support learning, so all of the input fan-in synapses 30 see that the neuron fired. The spike timing dependent plasticity (STDP) module 80 may receive this backwards action potential (bAP) notification 70 and communicate with the synapses 30 accordingly.

Each component of the neural core described above, corresponding loosely to analogous functions in a biological neuron, may be replicated for a potentially large number of these elements contained within the core. The logical processing of these state elements within the core may occur in a sequential, time-multiplexed manner, as is used in typical high-performance digital circuits.

The present disclosure focuses on multi-component dendrites and dendritic compartments within the dendrite model 40, which is expanded upon below.

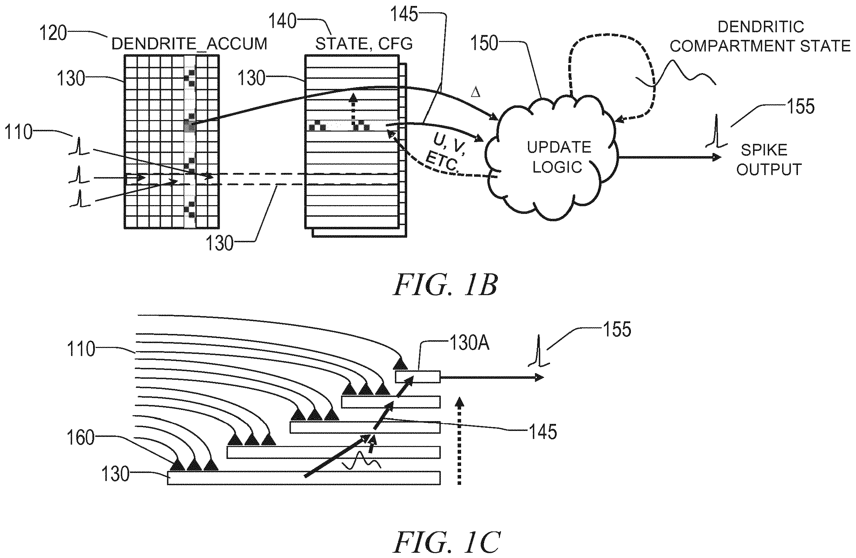

FIG. 1B is a pictorial diagram that illustrates one configuration of a multi-compartment neurons and a dendritic accumulation process for handling, and scheduling spikes into the future handling, inside the core. Synaptic inputs 110 are provided to a dendrite accumulator structure 120, which may architecturally be a matrix that maintains synaptic stimulation counters of weight values for a particular compartment 130. A compartment 130, as defined herein, is a conceptual neural unit that contains state and configuration variables 140 for the dynamic state of a neuron. It is a component of a dendritic tree that may be processed in sequence with related compartments. Preserving some state information for a compartment 130 and passing it along as the compartments are processed provides for a broad class of information processing that may happen in the core.

The processing of compartments 130 may be limited if the state information is not preserved and passed on in subsequent processing. A simple spiking neuron model may invoke both excitatory input and inhibitory input, and the two input classes have two different time constants typically, which may control the filtering that is applied to the time domain inputs. To implement the simple spiking neuron model in the most straightforward way would mean building that capability into every single compartment 130, which makes the logic more complex and the state more costly. With the multi-compartment system, the processing may be broken down into two compartments, with the results from each later added together to get the ultimate current stimulation for a neuron. This more complex neuron type may be supported without needing to implement the more complex functionality as the common denominator across all compartments in the core. That functionality that may not be necessary for many algorithmic applications, so the more flexible multi-compartment structure provides efficiency gains for those simpler applications.

A dendrite accumulator structure 120 may maintain synaptic stimulation counters of weight values for a particular compartment 130, the compartment being a breakdown of a neural tree structure or simply an abstract neural unit. Each compartment 130 may have state variables (u, v) that contain a dynamic state of what is occurring in the neuron.

A sequential process with the update logic 150 may walk through all of these compartments 130 (compartment indices), and receive configuration parameters and state variables 145 from each of the compartments 130. As a result of the update, the compartment may generate a spike output 155. Because this is a sequential process, it is inexpensive and easy to preserve some state information that is associated with propagating information of the tree while the update logic 150 loops over the compartment indices. This can be accomplished simply by utilizing temporary register storage in the logic.

FIG. 1C is a pictorial diagram that shows a state structure of multiple compartments and illustrates how the sequential walk through the compartment indices 130 can easily implement a tree-like data flow. Each of the rows 130 of this state structure, which may be memory elements in the core's SRAMs, represents a compartment 130 that receives synaptic input 110, via synaptic connections 160. The core walks through these with state variables 145 being propagated from each of the compartments 130, up to one final route compartment 130A which would be the soma (in the biological nomenclature), which provides a spike output 155. All of the other compartments 130 in FIG. 1C are simply passing on their intermediate terms. Any dendrite index may be configured as either a compartment in the dendritic tree or a soma. The tree structure may be implemented by propagating and combining real-valued current and/or voltage states iteratively, for example, in some fixed-point digital encoding, as described below.

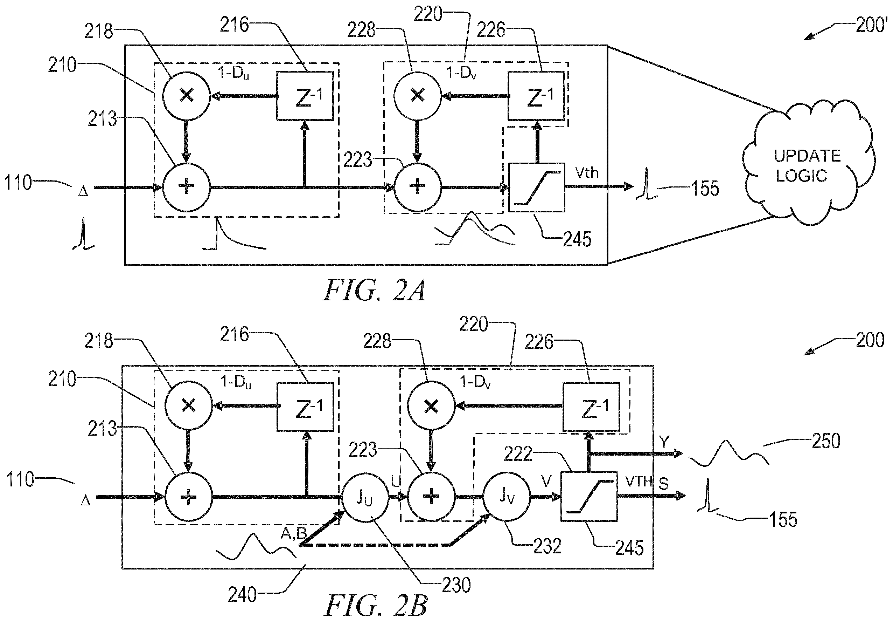

FIG. 2A is a block diagram illustrating state dynamics for a dendritic compartment 200' (use of the term "dendrite" below is to be construed synonymous with, and as shorthand for, the phrase "dendritic compartment") according to a simple neuron model, which is basically a discrete time filtering circuit. A first state variable operation 210 may be performed that is based on a stored first state variable, in this example, the current u, and the spike input 110 received. A second state variable operation 220 may then subsequently performed that is based on a stored second state variable, in this example, the voltage v, and the output of the first variable operation 210. A threshold function 245 may be utilized to determine if the dendritic compartment 200' should spike or at least indicate a spiking value even if it does not actually spike.

The compartment signal processing model shown in FIG. 2A exemplarily represents a simple current-based Leaky Integrate-and-Fire (LIF) neuron model. The subthreshold dynamics of the LIF neuron model are described by the following discrete-time dimensionless difference equations, as provided by filters 210 and 220 respectively:

$$u[t] = \left(1 - \frac{1}{\tau_s}\right)u[t-1] + \sum_{i \in I} w_i \, s_i[t]$$

$$v[t] = \left(1 - \frac{1}{\tau_m}\right)v[t-1] + u[t] + b$$

where:

$\tau_s$ and $\tau_m$ are synaptic and membrane time constants, respectively;
$I$ is the set of fanin synapses for the neuron;
$w_i$ is the weight of synapse $i$;
$s_i[t]$ is the count of spikes received for time step $t$ at synapse $i$, after accounting for synaptic delays;
b is a constant bias current; and
$\Delta = \sum_{i \in I} w_i s_i[t]$ corresponds to dendrite accumulator input 110.

For computational efficiency, the exponential scalings are configured and scaled according to the following fixed-point approximation:

$$\left(1 - \frac{1}{\tau}\right) \approx \frac{4096 - D}{4096}$$

where the $D$ decay constants ($D_u$ and $D_v$ in FIG. 2A) can range over [0,4096], corresponding to $\tau$ time constants nonlinearly spaced over the range [1,∞].

When the membrane voltage $v[t]$ passes some fixed threshold Vth from below, the compartment generates an output spike 155.

FIG. 2B is a block diagram illustrating state dynamics and the dendritic accumulation process for a dendritic compartment 200 according to a multi-compartment neuron model. The dendritic compartments 200, 200' may be, for example, the dendritic compartments 130 described above. The diagram of FIG. 2B is similar to the diagram in FIG. 2A, and a description of similar elements will not be repeated. However, in the design shown in FIG. 2B, to enhance the design for the multi-compartment processing, two points Ju 230, Jv 232, have been added in the logic where information coming from earlier compartments A, B 240 in the sequential process may be joined.

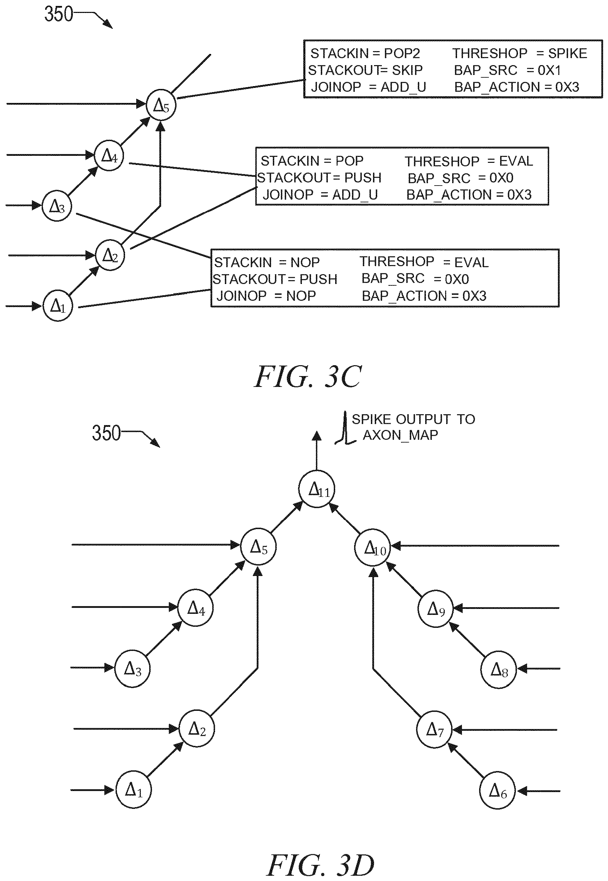

The structure described above provides a way to join in, as in a tree structure, the earlier input A, B 240 on towards the root of a dendritic tree (FIG. 3D, discussed in more detail below). Each of these join operations Ju 230, Jv 232, combines a dynamic state variable, either u (current) or v (voltage), from one or more input compartments that are thereby interlinked to the destination compartment. Since there are two such variables in this example, there are two different join possibilities (join points in the signal flow) 230, 232.

The current from the earlier input 240 may be provided at a first junction point 230, and the voltage from the earlier input 240 may be provided at a second junction point 232. When so configured, a compartment may produce an output value Y 250 corresponding to one or more fixed-point numbers representing state variables u or v of the dendritic compartment 200. The Y output thereby becomes the input to join operations 230 or 232 of downstream compartments. Additionally, a spike function 222 may be configured to send a spike value S 155 (a binary value representative of a spike) if the compartment's spike threshold value has been reached, which may also be referenced as an input in downstream join operations.

A common application, as illustrated, is a neuron that may be stimulated with both excitatory and inhibitory input, each with its own exponential filtering time constant. This spiking neuron model and networks of these neurons may be capable of implementing powerful neural information processing algorithms (e.g., E/I networks).

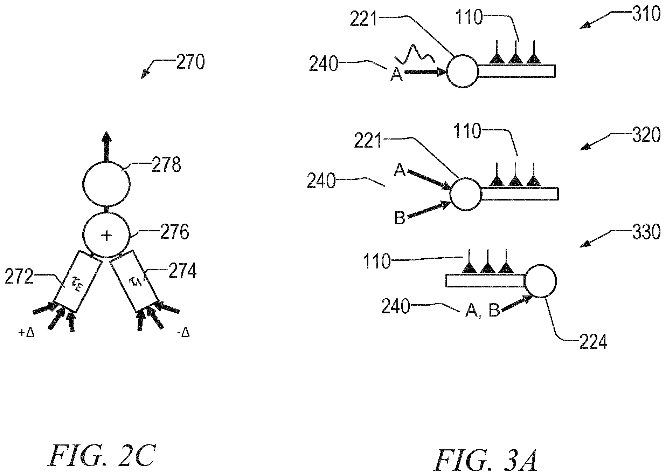

FIG. 2C is a block diagram that illustrates an E/I neuron 270. With the multi-compartment support described herein, an E/I neuron may be constructed out of two primitive units (compartments), a first 272 that integrates the "E" input that decays exponentially with the $\tau_E$ time constant, and a second 274 that integrates the "I" input that decays exponentially with $\tau_I$ time constant. The "E" input is excitatory synaptic input and the "I" input is inhibitory synaptic input. An ADD_U JoinOp 276 is illustrated as an example in which currents from the E compartment 272 and the I compartment 274 are linearly added. An output compartment 278 is configured as the soma-it produces a spike output when the total activation from its input compartments (increased by E and reduced by I) is sufficiently high.

An alternative is to implement a more complex single neuron model that includes the complexity of the E/I neuron implementation. Since many neuromorphic algorithms may not need this complexity, the presently described architecture provides a flexible and efficient neuromorphic processing solution. In this manner, the architecture can be generalized to an extremely flexible neuromorphic processor that can, through programming, implement a wide range of conventional neuron models (some with potentially significant value for machine learning applications).

In biology, an efficiency may be realized by communicating numbers 250 (continuous data) as opposed to just binary spike values 155. The generation of neural networks that is focused on spiked base signaling is largely driven by the efficiency that comes from long-range parallel communication using just a bare minimum of information for energy and performance efficiency. Although it is possible to process a large space of algorithmic problems with basic spike base signaling methodology, this approach is limited. There is still value in communicating numbers 250 as opposed to just binary spike events 155 with temporal codes, specifically when the communication is sufficiently local. Biological neurons use their dendritic trees for this purpose. A dendritic tree may be viewed as a spatially local region of the neuron over which it is efficient to send continuous current or voltage values across the membrane of the neuron. This principle also applies to neuromorphic computations embodied in silicon VLSI circuits.

FIG. 3A is a pictorial diagram of some structural models that this architecture may support. A series of join operations may be provided that constitutes a manner of an instruction set that the core supports. For example, one might add the u variable along with an input from another compartment. Or, instead of an add, a multiply may be used as the join operation. Also possibly included is, for example, an AND of a spiking condition of whether the input compartment is past its threshold or not, and then whether this compartment's v has passed its threshold or not-the AND condition of those two, or the OR condition of those two could also be taken. There are a number of different operations that may be defined (see Table 1 below).

The structure that includes information from other compartments gives the dendritic tree structure a large amount of computational capability, compared to a pure feed-forward calculator. This creates a very flexible interlinked dynamic system of these differential equation state variables.

With regard to the structural models for a dendritic compartment, in a first structure 310, a single input A from earlier compartment information 240 is provided into a join operation 230 to which synaptic inputs 110 are applied post-operation. The single input structure provides for linear chaining, successive attenuation/scaling, and Boolean gating conditions. In a second structure 320, similar to the first structure 310, two inputs A, B from earlier compartment information 240 are provided into the join operation 230. This structure may be used for "current mode" joining, and permits local synapses to gate downstream branches. In a third structure 330, the synaptic inputs 110 are applied pre-operation, and the join operation 230, 232 includes the synaptic inputs along with the two inputs A, B, from earlier compartment information 240. This structure may be used for "voltage mode joining", involving multiplicative non-linearity, and Boolean spike conditions (AND/OR).

A set of operations may be provided, described in more detail in Table 1 below, that may be viewed as an instruction set of what the core supports. For example, one could add from the u variable and provide input from the other compartment 240. One could multiply, take an AND of a spiking condition of whether the input compartment is past its threshold or not, and then whether the destination compartment has passed its threshold or not. One could also take an OR of those two, or use any number of different defined join operations. This approach endows the dendritic tree structure with a large amount of computational capability. Furthermore, the recurrent connections often present in the larger network, along with the inherent temporal dimension of spiking neural networks, serve to dynamically interlink these state variables as a system of nonlinear integral equations, giving the system computational capabilities far beyond those of a simple feed forward calculator.

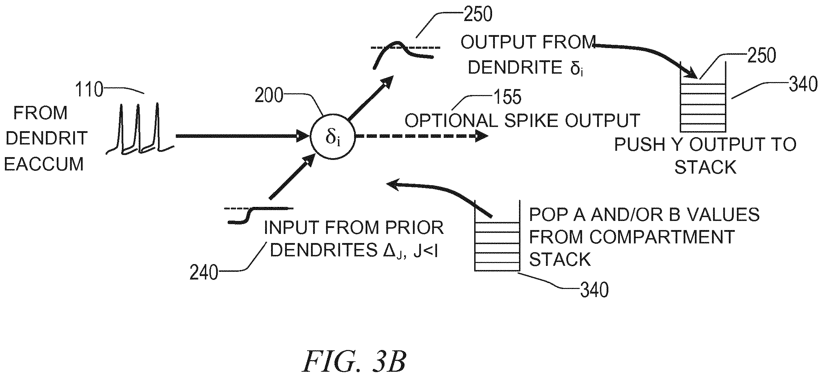

FIG. 3B is a pictorial diagram illustrating the inputs and outputs of a dendritic compartment 200. The inputs 110 are provided to the dendritic compartment $\delta_i$ 200, along with the inputs from prior dendrites $\delta_j$ (j<i) 240. In addition to a possible spike output 155, a continuous output 250 is also provided.

As can be seen in FIG. 3B, one approach to implementing this is to use a stack 340 along with stack semantics. Stacks can be efficiently implemented with electronic circuits, and stack semantics can be easily encoded with a small number of compartment configuration bits. As shown in FIG. 3B, the output 250 from the dendrite $\delta_i$ is pushed onto a stack 340, and the input from the prior dendrite $\delta_j$ is popped from the stack 340.

With as few as three primitive operations per compartment, namely PUSH, POP, and POP2 (pop two elements from the stack), arbitrary tree structures may be constructed. The system may utilize these stack semantics to simplify the encoding and implementation of each compartment's behavior as it relates to compartment-to-compartment communication.

FIGS. 3C and 3D are pictorial diagrams of dendritic trees and illustrate how primitive stack operations (e.g., PUSH, POP, POP2) may be used to construct arbitrary trees 350 of neural units that are individually updated sequentially in a natural manner for silicon circuit implementation.

Each compartment 200 may support a variety of "operations" 230, 232 that control how the information from the stack 340 may be integrated into the neural unit's processing model. These may include, for example, ADD, MUL, PASS, BLOCK, AND, OR, etc. Table 1, below, provides some further example operations that may be supported.

*Table 1*

| Field | Bits | Description | Encoding | |
|-------|------|-------------|----------|---|
| StackIn | 15:14 | Compartment stack input handling | 0: (SKIP) | Don't read from the CStack |
| | | | 1: (PEEK) | Peek from the CStack |
| | | | 2: (POP) | Pop from the CStack |
| | | | 3: (POP2) | Pop two from the CStack |
| StackOut | 13:12 | Compartment stack output handling | 0: (SKIP) | Don't push to the CStack |
| | | | 1: (PUSH) | Push (Y, S) to the CStack |
| | | | 2: (PUSHN) | Push (normalize(Y), S) to the CStack |
| JoinOp | 11:8 | Compartment join operation | 0: (NOP) | |
| | | | 1: (ADD_U) | U' = U+A+B |
| | | | 2: (MAX_U) | U' = max(U, A, B) |
| | | | 3: (MIN_U) | U' = min(U, A, B) |
| | | | 4: (PASS_U) | U' = A.S ? U+B : 0 |
| | | | 5: (BLOCK_U) | U' = A.S ? 0 : U+B |
| | | | 6: (OR_S) | S' = A.S \| B.S \| S |
| | | | 7: (AND_S) | S' = A.S \| B.S* & S |
| | | | 8: (MUL_V) | U' = U+B; $V' = V*A/2^{23}$ |
| ThreshOp | 7:6 | Operation to apply when V > Vth | 0: Spike | |
| | | | 1: Spike w/ random RefractDelay | |
| | | | 2: Evaluate S=V>Vth only | |
| | | | 3: Evaluate S=V>Vth and saturate at Vth | |
| bAP_Src | 5:2 | Mask over potential bAP sources | 0: Activate bAP when V>Vth | |
| | | | 1: unused | |
| | | | 2: Activate bAP when S=1 from cx input 0 | |
| | | | 3: Activate bAP when S=1 from cx input 1 | |
| bAP_Action | 1:0 | Action to apply when bAP occurs | Bit 0: Activate refractory state | |
| | | | Bit 1: Propagate bAP backwards | |
| * B.S=1 if not valid (e.g., when JoinOp==POP, not POP2) | | | | |

*Example Operations*

The dendritic compartment 200 may thus receive and send information on a dendritic compartment chain through the stack 340, where, when it requires data from the compartment bus or the stack, it pops it, and if it is going to send data, it pushes it. These correspond to the primitive operations using just the push the POP and the POP2.

Described in more detail, FIG. 3C illustrates tree structures that may be built out using these operations in which the dendrite identifiers (deltas) are numbered (subscript) as they would be sequentially serviced by the core, it starts at $\delta_1$ and ends at $\delta_5$. The first dendrite compartment $\delta_1$ PUSHes, and the second dendrite compartment $\delta_2$ POPs and PUSHes, the third dendrite compartment $\delta_3$ just PUSHes (it is not going to consume what the second dendrite compartment $\delta_2$ produces), the fourth dendrite compartment $\delta_3$ POPs and PUSHes, and the fifth dendrite compartment performs a POP2. If the fifth dendrite compartment $\delta_5$ is configured as a soma, and if the conditions are right this would be the compartment that spikes. FIG. 3D is a pictorial diagram showing a larger example with ten dendrites receiving synaptic input, aggregated in order of their subscripts, and a final dendrite $\delta_{11}$ configured as the aggregate neuron's soma that produces its spike outputs.

Thus, this construction makes the neural processor more closely analogous to a normal processor-it is a programmable structure (in a sense), where each compartment, through programming, may be controlled to function in a particular manner, through its input stack operation, its output stack operation, join operation(s), the threshold operation (whether to spike when a threshold is exceeded, or even whether the threshold is simply evaluated but does not change the neuron state, as a spike would (e.g., when conveying the state of whether the threshold has been exceeded or not)). These functions may all be programmed in the form of compartment configuration parameters, and this may be considered part of the programming of the core. This "programming" allows the core to execute a wide range of different neuromorphic algorithms that depend on multi-compartment dendritic processing interactions.

In biology, when the soma spikes, the spikes often propagate backwards, or towards the leaves, through the dendritic tree, and this mechanism is beneficial for learning. The plasticity at the synapses is a function of when and how often the postsynaptic neuron fires as well as when and how often the presynaptic neuron fires, so the synapse needs to be informed of the timing of these events. This may be part of a spike timing dependent plasticity (STDP) model, which may implement Hebbian learning, anti-Hebbian learning, and other models.

This poses a challenge for a multi-compartment neuromorphic core architecture since whenever the soma compartment fires, in order to support learning, all input compartments to the soma will need to be informed that the neuron fired so that the entire set of input fan-in synapses can respond appropriately. Yet in an efficient core design involving time-multiplexing and pipelining, the servicing of those input compartments will have occurred in the past and the pipeline will be busy servicing subsequent compartments beyond the soma.

In terms of programming, the backwards spike propagation may be implemented without requiring any further configuration of the core simply by executing the stack operations already configured in reverse order. However, for the sake of efficiency, it is undesirable for the backwards propagation be continuously active. A backwards spike propagation may be considered analogous to an exception in normal processor technology. The pipeline must be flushed, and the processing may need to go back to some known point. Here, the process will identify a spiking compartment as it iterates through the compartments, at which point the core may need to flush or stall the pipeline and then perform a backwards traversal/propagation.

Fortunately, for the sake of efficiency, this is an infrequent event, since neurons do not spike all the time-they only spike on an event when the spiking threshold has been exceeded. The backwards propagation may be provided, but it comes as a hit in the performance, because the processor has already progressed along to later compartments. The system waits for the processing to complete, and then insert the backwards propagation through the tree. A few bits of configuration may be used to prune that operation and specify each compartment's behavior in the backwards pass. An example of this configuration is shown in Table 1 (bAP_Src and bAP_Action fields). In terms of the example of FIG. 3D, when the soma of the dendritic compartment $\delta_{11}$ spikes, the system waits for the pipeline to clear, and then it inserts a backwards pass. It goes backwards through the tree, and the learning takes place at the leaves.

As described above, threshold information may be passed without actually spiking. A Boolean state variable may be propagated through the compartment stack which represents whether the voltage has exceeded the threshold or not, but this does not have to produce a spike for all of the intermediary compartments in a neuron tree. These would normally not be producing spikes but instead produce a Boolean S value, which is the spiking "state". At a particular join point, the system supports generating a backwards action potential (bAP). Based on the example definition of the bAP_Src configuration in Table 1, a compartment may generate a bAP event in response to its own V>Vth threshold evaluation (its S = 1 state), whether or not it is configured to generate an outbound spike, or when an input compartment's S state equals 1 (from a lateral branch). The latter option allows a backwards propagating spike to be generated in response to activation in an unrelated branch of the tree, without necessarily causing the neuron as a whole to spike.

With the semantics of the bAP_Src and bAP_Action parameters defined in Table 1, spikes may generate bAP waves spanning all of the neuron's compartment tree or over a more limited sub-tree. In some cases, the bAP event may involve just one leaf compartment. This bAP activity can operate at a small cost in core energy consumption by not causing the soma compartment to actually spike, saving all downstream spike routing and weight accumulation costs. This can be advantageous for some learning models by allowing neurons and neural parameters to adapt to sub-threshold patterns of activation.

Specifically, from the perspective of dendritic plasticity, the parameters associated with the neuron model itself, such as its threshold, time constants, bias currents, synaptic scaling constants, or JoinOp input scaling constants, may be dynamic and may change in response to either bAP spikes or forward going spikes. Based on the activation of a particular compartment 200, some of the parameters of this computational neuron model may be modified and be responsive to activity through the tree 350 of dendritic compartments. That is to say, the compartment parameters themselves may also change in response to the bAP mechanism. In terms of hardware implementation cost, such features may be readily and efficiently implemented due to the locally scoped and event-driven nature of the bAP mechanism.

In the dendritic tree 350, in this neuromorphic core implementation, local information (Y and S as defined above) can be communicated across the full extend of a multi-compartment dendritic tree with constant hardware resource cost, independent of the size of the tree or the number of compartments implemented by the core. This is because the core, for efficiency and performance reasons as explained above, already must sequentially service the compartment state sequentially in a time-multiplexed way. The sequential process illustrated in FIGS. 3C and 3D walks through all of the compartment indices in a logic loop, which makes it very cheap and easy to just preserve, in a temporary storage register (e.g., latches, flip-flops, or SRAM state bits in the core), some state information that is associated with propagating information of the tree. As the logic walks through the compartment indices, it is possible to propagate numbers (the state variables) from each of the compartments, up to one final route compartment (a soma in the biological nomenclature) which is the one that spikes (in FIG. 3D, this is $\delta_{11}$). All of the other compartments may just pass on their intermediate state terms. At the final route compartment, the temporary storage register is guaranteed to be empty and available for the next multi-compartment neuron's use.

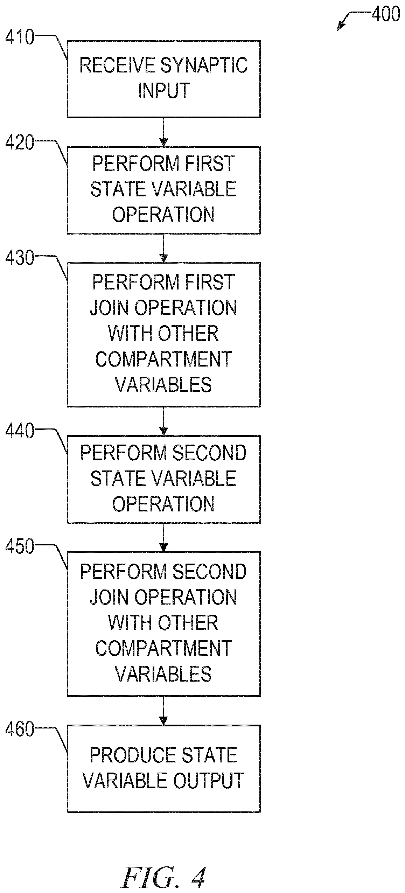

FIG. 4 is a flowchart of an example use of dendritic compartments, as described above. In operation 410, a synaptic input to the dendritic compartment is received by the core. In operation 420, the core performs a first state variable operation. In operation 430, a first join operation is performed using one or more output variables of another compartment that is lower in a dendritic hierarchical tree structure with a lower compartment index and therefore was serviced earlier. In operation 440, the core performs a second state variable operation. In operation 450, a second join operation is performed using one or more output variables of the same input compartment or compartments. Finally, in operation 460, a state variable output is provided-optionally, a spike may be provided as well.

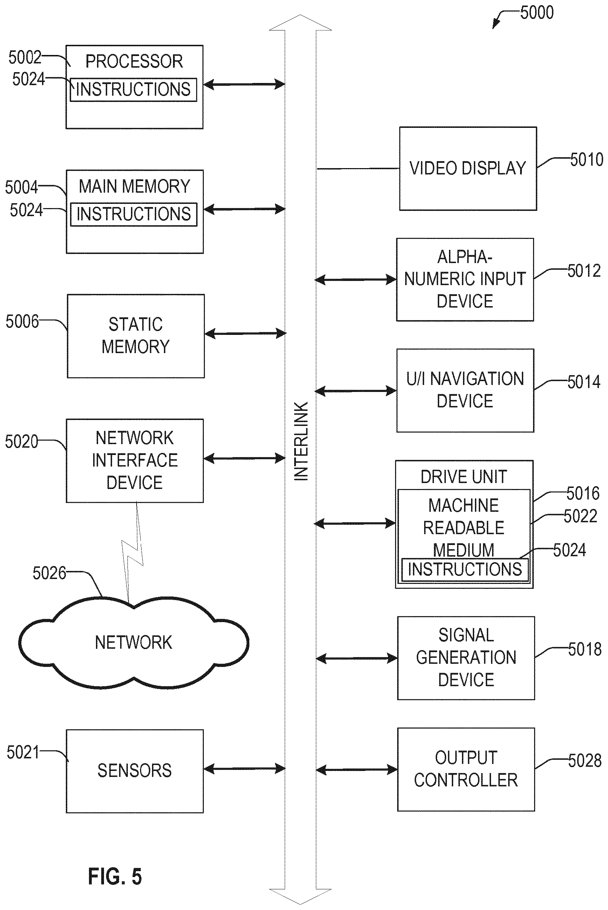

FIG. 5 is a block diagram illustrating a machine 5000 upon which one or more of the techniques (e.g., methodologies) discussed herein may be performed, for example. In alternative embodiments, the machine 5000 may operate as a standalone device or may be connected (e.g., networked) to other machines. In a networked deployment, the machine 5000 may operate in the capacity of a server machine, a client machine, or both in server-client network environments. In an example of a machine described herein, the machine 5000 may act as a peer machine in peer-to-peer (P2P) (or other distributed) network environment. The machine 5000 may be a personal computer (PC), a tablet PC, a set-top box (STB), a personal digital assistant (PDA), a mobile telephone, a smart phone, a web appliance, a network router, switch or bridge, or any machine capable of executing instructions (sequential or otherwise) that specify actions to be taken by that machine. Machine 5000 may function as an MUA, MTA, computing device executing an application, DNS, CA, PKS, Key Manager, Key Keeper, or the like. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules may include tangible entities (e.g., hardware) capable of performing specified operations and may be configured or arranged in a certain manner. For example, circuits may be arranged (e.g., internally or with respect to external entities such as other circuits) in a specified manner as a module. For example, the whole or part of one or more computer systems (e.g., a standalone, client or server computer system) or one or more hardware processors may be configured by firmware or software (e.g., instructions, an application portion, or an application) as a module that operates to perform specified operations. For example, the software may reside on a machine readable medium. In an example as described herein, the software, when executed by the underlying hardware of the module, causes the hardware to perform the specified operations.

Accordingly, the term "module" is understood to encompass a tangible entity, and that entity may be one that is physically constructed, specifically configured (e.g., hardwired), or temporarily (e.g., transitorily) configured (e.g., programmed) to operate in a specified manner or to perform part or all of any operation described herein. For examples, in modules that are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Machine (e.g., computer system) 5000 may include a neuromorphic processor 110, 300, a hardware processor 5002 (e.g., a central processing unit (CPU), a graphics processing unit (GPU), a hardware processor core, or any combination thereof), a main memory 5004 and a static memory 5006, some or all of which may communicate with each other via an interlink (e.g., bus) 5008. The machine 5000 may further include a display unit 5010, an alphanumeric input device 5012 (e.g., a keyboard), and a user interface (UI) navigation device 5014 (e.g., a mouse). For example, the display unit 5010, input device 5012 and UI navigation device 5014 may be a touch screen display. The machine 5000 may additionally include a storage device (e.g., drive unit) 5016, a signal generation device 5018 (e.g., a speaker), a network interface device 5020, and one or more sensors 5021, such as a global positioning system (GPS) sensor, compass, accelerometer, or other sensor. The machine 5000 may include an output controller 5028, such as a serial (e.g., universal serial bus (USB)), parallel, or other wired or wireless (e.g., infrared(IR), near field communication (NFC), etc.) controller connection to communicate or control one or more peripheral devices (e.g., a printer, card reader, etc.).

The storage device 5016 may include a machine readable medium 5022 on which is stored one or more sets of data structures or instructions 5024 (e.g., software) embodying or utilized by any one or more of the techniques or functions described herein. The instructions 5024 may also reside, completely or at least partially, within the main memory 5004, within static memory 5006, or within the hardware processor 5002 during execution thereof by the machine 5000. In an example, one or any combination of the hardware processor 5002, the main memory 5004, the static memory 5006, or the storage device 5016 may constitute machine readable media.

While the machine readable medium 5022 is illustrated as a single medium, the term "machine readable medium" may include a single medium or multiple media (e.g., a centralized or distributed database, and/or associated caches and servers) configured to store the one or more instructions 5024.

The term "machine readable medium" may include any medium that is capable of storing, encoding, or carrying instructions for execution by the machine 5000 and that cause the machine 5000 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); Solid State Drives (SSD); and CD-ROM and DVD-ROM disks. In some examples, machine readable media may include non-transitory machine readable media. In some examples, machine readable media may include machine readable media that is not a transitory propagating signal.

The instructions 5024 may further be transmitted or received over a communications network 5026 using a transmission medium via the network interface device 5020. The Machine 5000 may communicate with one or more other machines utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 5020 may include one or more physical jacks (e.g., Ethernet, coaxial, or phone jacks) or one or more antennas to connect to the communications network 5026. In an example, the network interface device 5020 may include a plurality of antennas to wirelessly communicate using at least one of single-input multiple-output (SIMO), multiple-input multiple-output (MIMO), or multiple-input single-output (MISO) techniques. In some examples, the network interface device 5020 may wirelessly communicate using Multiple User MIMO techniques.

The connecting lines, or connectors shown in the various figures presented may, in some instances, be intended to represent example functional relationships and/or physical or logical couplings between the various elements. However, many alternative or additional functional relationships, physical connections or logical connections may be present in a practical device.

For example, an electronic neural core circuit can have a plurality of neural compartments that are collectively serviced over time to evolve respective compartment states, wherein each servicing corresponds to a neuromorphic time step, and each compartment has a state variable representing a state of the neural compartment. The neural core circuit may be configured to perform operations to, for a neural compartment during the neuromorphic time step: a) receive a synaptic input; b) perform a state variable operation utilizing: 1) a stored state variable that was stored in the neural compartment prior to receipt of the synaptic input, and 2) the synaptic input, thereby producing a state variable result; c) perform a join operation utilizing: 1) the state variable result, 2) input from a state variable from an other compartment that has been previously processed, and 3) a join operation configuration that is stored in or associated with the neural compartment, thereby producing a join operation result; and d) produce a state variable output based on the join operation.

This may includes that the neural core circuit is further configured to produce a spike-related output if the join operation result reaches a spiking threshold. The spike-related output may be an actual spike event. For example, the spike-related output is a spiking state value only, that is a part of the state variable output.

Further, the neural core circuit may be configured to utilize a stack and the join operations may include stack operations to communicate state variables from one dendritic compartment to a different dendritic compartment, wherein, for example, the stack operations may include push and pop and the neural core circuit may be further configured to pop input from the state variables from the other compartment from the stack and to push the state variable output to the stack.

The operations may include stack operations, the join operations, threshold operations, backward action potential (bAP) operations, mathematical operations, and Boolean logic operations.

The neural core circuit may be further configured to, upon completion of operation (d) for a first neural compartment, perform operations (a)-(d) for a second neural compartment, wherein at least one variable output of the first neural compartment is at least one of the variables from the other compartment in the second neural compartment. For example, the neural core circuit may be further configured to execute through a hierarchical dendritic tree structure from the dendritic compartments it processes and produce a spiking event from only a highest dendritic compartment of the dendritic tree structure. For example, he neural core circuit may be further configured to generate a backward action potential (bAP) that executes through the hierarchical dendritic tree structure in a reverse order, based on the spiking event. For example, the neural core circuit may be further configured to communicate the bAP, including its implicit spike time or spike time dependent state variable, to all fan-in synapses of all dendritic compartments that receive synaptic input. For example, the neural core circuit may be further configured to change one or more parameters associated with a neuron model of a dendritic compartment itself in response to a backward action potential (bAP) or forward going spikes or spiking state values. One of the parameters may be a spiking threshold and, optionally, one or more parameters include at least the spiking threshold, state variable exponential decay time constants, current bias constants, scaling constants applied to synaptic inputs, and scaling constants applied to join operation inputs. The neural core circuit may be further configured to concurrently process a plurality of dendritic compartments.

The state variable may be a first state variable and the neural compartment may have a second state variable representing a second state of the neural compartment and the neural core circuit may be further configured to perform operations to, for a neural compartment during the neuromorphic time step: e) perform a second state variable operation utilizing: 1) a stored second state variable that was stored in the memory prior to receipt of the synaptic input, and 2) the first join operation, thereby producing a second state variable result; and f) perform a second join operation utilizing: 1) the second state variable result, 2) input from a second state variable from the other compartment that has been previously processed, and 3) join operation configuration that is stored in the memory associated with the neural compartment, thereby producing a second join operation result; and wherein the producing of the state variable output is further based on the second join operation.

Now turning to a method which can be executed by a processor of an electronic neural core circuit. The method may include: during a neuromorphic time step: a) receiving a synaptic input at a dendritic compartment; b) performing a state variable operation utilizing: 1) a stored state variable that was stored in the memory prior to receipt of the synaptic input, and 2) the synaptic input, thereby producing a state variable result; c) performing a join operation utilizing: 1) the first state variable result, 2) input from a first state variable from an other compartment that has been previously processed, and 3) join operation configuration that is stored in the memory associated with the neural compartment, thereby producing a first join operation result; and d) producing a state variable output based on the join operation. For example, the method may further include operating using a stack, and communicating state variables from one dendritic compartment to a different dendritic compartment using stack operations in the join operations. For example, the method may further include popping input from the state variables from the other compartment from the stack, and pushing the state variable output to the stack. For example, the operations include stack operations, the join operations, threshold operations, backward action potential (bAP) operations, mathematical operations, and Boolean logic operations.

The method may further include executing through a hierarchical dendritic tree structure from the dendritic compartments being processed; and producing a spiking event from only the highest level value.

The method may be performed by a system which has means to perform the method. A machine readable medium may including instructions that, when executed by a machine, cause the machine to perform the method.

For example, a plurality of instructions may be comprised by one or more machine-readable storage medium, wherein the plurality of instructions are adapted for execution within an electronic neural core circuit, wherein the instructions, responsive to being executed with the neural core circuit of a computing machine, cause the computing machine to perform operations that: during a neuromorphic time step: a) receive a synaptic input at a dendritic compartment; b) perform a state variable operation utilizing: 1) a stored state variable that was stored in the memory prior to receipt of the synaptic input, and 2) the synaptic input, thereby producing a state variable result; c) perform a join operation utilizing: 1) the first state variable result, 2) input from a first state variable from an other compartment that has been previously processed, and 3) join operation configuration that is stored in the memory associated with the neural compartment, thereby producing a first join operation result; and d) produce a state variable output based on the join operation. For example, the instructions are further operable to configure the circuit to utilize a stack and the join operations include stack operations to communicate state variables from one dendritic compartment to a different dendritic compartment, wherein the stack operations include push and pop, and the processor is further configured to pop input from the state variables from the other compartment from the stack, and to push the state variable output to the stack.

A system of operating an electronic neuromorphic core processor, may have, during a neuromorphic time step: a) means for receiving a synaptic input at a dendritic compartment; b) means for performing a state variable operation utilizing: 1) a stored state variable that was stored in the memory prior to receipt of the synaptic input, and 2) the synaptic input, thereby producing a state variable result; c) means for performing a join operation utilizing: 1) the first state variable result, 2) input from a first state variable from an other compartment that has been previously processed, and 3) join operation configuration that is stored in the memory associated with the neural compartment, thereby producing a first join operation result; and d) means for producing a state variable output based on the join operation. The system may have means for operating using a stack, and communicating state variables from one dendritic compartment to a different dendritic compartment using stack operations in the join operations. The system may have means for popping input from the state variables from the other compartment from the stack, and pushing the state variable output to the stack. The operations may include stack operations, the join operations, threshold operations, backward action potential (bAP) operations, mathematical operations, and Boolean logic operations. The system of operating an electronic neuromorphic core processor may further include executing through a hierarchical dendritic tree structure from the dendritic compartments being processed; and producing a spiking event from only the highest level value.

## Claims

1. An electronic neural core circuit, comprising:

 a plurality of dendritic compartments (200, 200', A, B) that are collectively serviced over time to evolve respective compartment states, wherein each servicing corresponds to a neuromorphic time step, and each compartment comprises a state variable representing a state of the dendritic compartment (200, 200', A, B);
 wherein the neural core circuit is configured to perform operations to, for a dendritic compartment (200, 200', A, B) during the neuromorphic time step:

   a) receive a synaptic input;
   b) perform a state variable operation utilizing: 1) a stored state variable that was stored in the dendritic compartment (200, 200', A, B) prior to receipt of the synaptic input, and 2) the synaptic input, thereby producing a state variable result;
   c) perform a join operation utilizing: 1) the state variable result, 2) input from a state variable from another compartment (200, 200', A, B) that has been previously serviced, and 3) a join operation configuration that is stored in or associated with the dendritic compartment (200, 200', A, B), thereby producing a join operation result; and
   d) produce a state variable output based on the join operation;

 wherein the neural core circuit is further configured to

   service two or more of the dendritic compartments (200, 200', A, B) which are arranged in a hierarchical dendrite tree structure, and
   produce a spiking event from only the highest dendritic compartment at the root of the hierarchical dendrite tree structure; and
   wherein each dendritic compartment (200, 200', A, B) of the plurality of dendritic compartments (200, 200', A, B) comprises a stack (340) implemented with electronic circuits and configuration bits encoding stack semantics.

2. The circuit of claim 1, wherein the neural core circuit is further configured to produce a spike-related output if the join operation result reaches a spiking threshold.

3. The circuit of claim 2, wherein the spike-related output is an actual spike event.

4. The circuit of claim 2, wherein the spike-related output is a spiking state value only, that is a part of the state variable output.

5. The circuit of claim 1, wherein:

the join operation includes a stack operation to communicate state variables from one dendritic compartment (200, 200', A, B) to a different dendritic compartment (200, 200', A, B).

6. The circuit of claim 5, wherein:

the stack operations include push and pop; and
the neural core circuit is further configured to pop input from the state variable from the another compartment (200, 200', A, B) from the stack (340), and to push the state variable output to the stack (340).

7. The circuit of claim 1, wherein the operations include stack operations, the join operation, threshold operations, backward action potential (bAP) operations, mathematical operations, and Boolean logic operations.

8. The circuit of claim 1, wherein the neural core circuit is further configured to, upon completion of operation (d) for a first dendritic compartment (200, 200', A, B), perform operations (a)-(d) for a second dendritic compartment (200, 200', A, B), wherein at least one variable output of the first dendritic compartment (200, 200', A, B) is at least one of the variables from the another compartment (200, 200', A, B) in the second dendritic compartment (200, 200', A, B).

9. A method executed by a processor of an electronic neural core circuit, wherein the neural core circuit comprises a plurality of dendritic compartments (200, 200', A, B) that are collectively serviced over time to evolve respective compartment states, wherein each servicing corresponds to a neuromorphic time step, and each compartment comprises a state variable representing a state of the dendritic compartment (200, 200', A, B); and wherein the neural core circuit is configured to

service two or more of the dendritic compartments (200, 200', A, B) which are arranged in a hierarchical dendrite tree structure, and
produce a spiking event from only the highest dendritic compartment at the root of the hierarchical dendrite tree structure; and
wherein each dendritic compartment (200, 200', A, B) of the plurality of dendritic compartments (200, 200', A, B) comprises a stack (340) implemented with electronic circuits and configuration bits encoding stack semantics;

wherein the method comprises:

during a neuromorphic time step:

a) receiving a synaptic input at a dendritic compartment (200, 200', A, B);
b) performing a state variable operation utilizing: 1) a stored state variable that was stored in the dendritic compartment (200, 200', A, B) prior to receipt of the synaptic input, and 2) the synaptic input, thereby producing a state variable result;
c) performing a join operation utilizing: 1) the first state variable result, 2) input from a first state variable from another compartment (200, 200', A, B) that has been previously serviced, and 3) a join operation configuration that is stored in or associated with the dendritic compartment (200, 200', A, B), thereby producing a first join operation result; and
d) producing a state variable output based on the join operation.

10. The method of claim 9, further comprising communicating state variables from one dendritic compartment (200, 200', A, B) to a different dendritic compartment (200, 200', A, B) using a stack operation in the join operation.

11. The method of claim 10, further comprising popping input from the state variable from the another compartment (200, 200', A, B) from the stack (340), and pushing the state variable output to the stack (340).

12. The method of claim 9, wherein the operations include stack operations, the join operation, threshold operations, backward action potential (bAP) operations, mathematical operations, and Boolean logic operations.

13. The method of claim 9, further comprising:

   executing through a hierarchical dendritic tree structure from the dendritic compartment (200, 200', A, B)s being processed; and

   producing a spiking event from only the highest level value.

14. At least one machine readable medium including instructions that, when executed by a processor of an electronic neural core circuit cause the processor to perform any of the methods of claims 9-13;

   wherein the neural core circuit comprises a plurality of dendritic compartments (200, 200', A, B) that are collectively serviced over time to evolve respective compartment states,

   wherein each servicing corresponds to a neuromorphic time step, and each compartment comprises a state variable representing a state of the dendritic compartment (200, 200', A, B); and

   wherein the neural core circuit is configured to

   service two or more of the dendritic compartments (200, 200', A, B) which are arranged in a hierarchical dendrite tree structure, and

   produce a spiking event from only the highest dendritic compartment at the root of the hierarchical dendrite tree structure; and

   wherein each dendritic compartment (200, 200', A, B) of the plurality of dendritic compartments (200, 200', A, B) comprises a stack (340) implemented with electronic circuits and configuration bits encoding stack semantics..


**Patentansprüche**

1. Elektronische Schaltung eines neuronalen Kerns, die Folgendes umfasst:

   mehrere dendritische Fächer (200, 200', A, B), die gemeinsam über die Zeit bedient werden, um jeweilige Fachzustände zu entwickeln, wobei jedes Bedienen einem neuromorphen Zeitschritt entspricht und jedes Fach eine Zustandsvariable umfasst, die einen Zustand des dendritischen Fachs (200, 200', A, B) repräsentiert;

   wobei die Schaltung eines neuronalen Kerns konfiguriert ist, Vorgänge auszuführen, um für ein dendritisches Fach (200, 200', A, B) während des neuromorphen Zeitschritts:

   a) eine synaptische Eingabe zu empfangen;

   b) einen Zustandsvariablenvorgang auszuführen unter Verwendung von: 1) einer gespeicherten Zustandsvariable, die in dem dendritischen Fach (200, 200', A, B) vor dem Empfang der synaptischen Eingabe empfangen wurde, und 2) der synaptischen Eingabe, wodurch ein Zustandsvariablenergebnis erzeugt wird;

   c) einen Anschlussvorgang ausführt unter Verwendung von: 1) dem Zustandsvariablenergebnis, 2) einer Eingabe von einer Zustandsvariable von einem anderen Fach (200, 200', A, B), das vorher bedient wurde, und 3) einer Konfiguration eines Anschlussvorgangs, die in dem dendritischen Fach (200, 200', A, B) oder in Verbindung mit ihm gespeichert ist, wodurch ein Ergebnis eines Anschlussvorgangs erzeugt wird; und

   d) eine Zustandsvariablenausgabe anhand des Anschlussvorgangs erzeugt;

   wobei die Schaltung des neuronalen Kerns ferner konfiguriert ist zum:

   Bedienen zweier oder mehrerer der dendritischen Fächer (200, 200', A, B), die in einer hierarchischen dendritischen Baumstruktur angeordnet sind, und

   Erzeugen eines Spitzenereignisses nur von dem höchsten dendritischen Fach an dem Stamm der hierarchischen dendritischen Baumstruktur; und

   wobei jedes dendritische Fach (200, 200', A, B) der mehreren dendritischen Fächer (200, 200', A, B) einen Stapel (340) umfasst, der mit elektronischen Schaltungen und Konfigurationsbits, die Stapelsemantik codieren, implementiert ist.

2. Schaltung nach Anspruch 1, wobei die Schaltung eines neuronalen Kerns ferner konfiguriert ist, eine spitzenbezogene Ausgabe zu erzeugen, wenn das Ergebnis des Anschlussvorgangs einen Spitzenschwellenwert erreicht.

3. Schaltung nach Anspruch 2, wobei die spitzenbezogene Ausgabe ein tatsächliches Spitzenereignis ist.

4. Schaltung nach Anspruch 2, wobei die spitzenbezogene Ausgabe nur ein Spitzenzustandswert ist, der ein Teil der Zustandsvariablenausgabe ist.

5. Schaltung nach Anspruch 1, wobei:

    der gemeinsame Vorgang einen Stapelvorgang enthält, um Zustandsvariablen von einem dendritischen Fach (200, 200', A, B) an ein anderes dendritisches Fach (200, 200', A, B) zu kommunizieren.

6. Schaltung nach Anspruch 5, wobei:

    die Stapelvorgänge Schieben und Ziehen enthalten; und
    die Schaltung eines neuronalen Kerns ferner konfiguriert ist, eine Eingabe von der Zustandsvariable von dem anderen Fach (200, 200', A, B) von dem Stapel (340) zu ziehen und die Zustandsvariablenausgabe auf den Stapel (340) zu schieben.

7. Schaltung nach Anspruch 1, wobei die Vorgänge Stapelvorgänge, den Anschlussvorgang, Schwellenwertvorgänge, Rückwärtshandlungspotenzialvorgänge (bAP-Vorgänge), mathematische Vorgänge und Vorgänge Boole'scher Logik enthalten.

8. Schaltung nach Anspruch 1, wobei die Schaltung eines neuronalen Kerns ferner konfiguriert ist, bei Abschluss eines Vorgangs (d) für ein erstes dendritisches Fach (200, 200', A, B) die Vorgänge (a)-(d) für ein zweites dendritisches Fach (200, 200', A, B) auszuführen, wobei mindestens eine Variablenausgabe des ersten dendritischen Fachs (200, 200', A, B) mindestens eine der Variablen von dem anderen Fach (200, 200', A, B) in dem zweiten dendritischen Fach (200, 200', A, B) ist.

9. Verfahren, das durch einen Prozessor einer elektronischen Schaltung eines neuronalen Kerns ausgeführt wird, wobei die Schaltung eines neuronalen Kerns mehrere dendritische Fächer (200, 200', A, B) umfasst, die über die Zeit gemeinsam bedient werden, um jeweilige Fachzustände zu entwickeln, wobei jedes Bedienen einem neuromorphen Zeitschritt entspricht und jedes Fach eine Zustandsvariable umfasst, die einen Zustand des dendritischen Fachs (200, 200', A, B) repräsentiert; und wobei die Schaltung eines neuronalen Kerns konfiguriert ist zum:

    Bedienen zweier oder mehrerer der dendritischen Fächer (200, 200', A, B), die in einer hierarchischen dendritischen Baumstruktur angeordnet sind, und
    Erzeugen eines Spitzenereignisses nur von dem höchsten dendritischen Fach an dem Stamm der hierarchischen dendritischen Baumstruktur; und
    wobei jedes dendritische Fach (200, 200', A, B) der mehreren dendritischen Fächer (200, 200', A, B) einen Stapel (340) umfasst, der mit elektronischen Schaltungen und Konfigurationsbits, die Stapelsemantik codieren, implementiert ist;
    wobei das Verfahren Folgendes umfasst:

        während eines neuromorphen Zeitschritts:

            a) Empfangen einer synaptischen Eingabe an einem dendritischen Fach (200, 200', A, B);
            b) Ausführen eines Zustandsvariablenvorgangs unter Verwendung von: 1) einer gespeicherten Zustandsvariable, die in dem dendritischen Fach (200, 200', A, B) vor dem Empfang der synaptischen Eingabe empfangen wurde, und 2) der synaptischen Eingabe, wodurch ein Zustandsvariablenergebnis erzeugt wird;
            c) Erzeugen eines Anschlussvorgangs unter Verwendung von: 1) dem ersten Zustandsvariablenergebnis, 2) einer Eingabe von einer ersten Zustandsvariable von einem anderen Fach (200, 200', A, B), das vorher bedient wurde, und 3) einer Konfiguration eines Anschlussvorgangs, die in dem dendritischen Fach (200, 200', A, B) oder in Verbindung mit ihm gespeichert ist, wodurch ein Ergebnis eines Anschlussvorgangs erzeugt wird; und
            d) Erzeugen einer Zustandsvariablenausgabe anhand des Anschlussvorgangs.

10. Verfahren nach Anspruch 9, das ferner umfasst, Zustandsvariablen von einem dendritische Fach (200, 200', A, B) an ein anderes dendritisches Fach (200, 200', A, B) unter Verwendung eines Stapelvorgangs in dem Anschlussvorgang zu kommunizieren.

11. Verfahren nach Anspruch 10, das ferner umfasst, eine Eingabe von der Zustandsvariable von dem anderen Fach (200, 200', A, B) von dem Stapel (340) zu ziehen und die Zustandsvariablenausgabe auf den Stapel (340) zu schieben.

12. Verfahren nach Anspruch 9, wobei die Vorgänge Stapelvorgänge, den Anschlussvorgang, Schwellenwertvorgänge, Rückwärtshandlungspotenzialvorgänge (bAP-Vorgänge), mathematische Vorgänge und Vorgänge Boole'scher Logik enthalten.

13. Verfahren nach Anspruch 9, das ferner Folgendes umfasst:

Ausführen durch eine hierarchische dendritische Baumstruktur von dem dendritischen Fach (200, 200', A, B), das verarbeitet wird; und
Erzeugen eines Spitzenereignisses nur von dem höchsten Pegelwert.

14. Mindestens ein maschinenlesbares Medium, das Anweisungen enthält, die dann, wenn sie durch einen Prozessor einer elektronischen Schaltung eines neuronalen Kerns ausgeführt werden, bewirken, dass der Prozessor eines der Verfahren der Ansprüche 9-13 ausführt;

wobei die Schaltung eines neuronalen Kerns mehrere dendritische Fächer (200, 200', A, B), die gemeinsam über die Zeit bedient werden, um jeweilige Fachzustände zu entwickeln, umfasst,
wobei jedes Bedienen einem neuromorphen Zeitschritt entspricht und jedes Fach eine Zustandsvariable umfasst, die einen Zustand des dendritischen Fachs (200, 200', A, B) repräsentiert; und
wobei die Schaltung eines neuronalen Kerns konfiguriert ist zum:

Bedienen zweier oder mehrerer der dendritischen Fächer (200, 200', A, B), die in einer hierarchischen dendritischen Baumstruktur angeordnet sind, und
Erzeugen eines Spitzenereignisses nur von dem höchsten dendritischen Fach an dem Stamm der hierarchischen dendritischen Baumstruktur; und
wobei jedes dendritische Fach (200, 200', A, B) der mehreren dendritischen Fächer (200, 200', A, B) einen Stapel (340) umfasst, der mit elektronischen Schaltungen und Konfigurationsbits, die Stapelsemantik codieren, implementiert ist.

## Revendications

1. Circuit électronique de cœur neuronal, comprenant :

une pluralité de compartiments dendritiques (200, 200', A, B) qui sont collectivement pris en charge au fil du temps pour développer des états de compartiment respectifs, chaque prise en charge correspondant à un pas de temps neuromorphique et chaque compartiment comprenant une variable d'état représentant un état du compartiment dendritique (200, 200', A, B) ;
le circuit de cœur neuronal étant configuré pour réaliser des opérations consistant, pour un compartiment dendritique (200, 200', A, B) durant le pas de temps neuromorphique, à :

a) recevoir une entrée synaptique ;
b) réaliser une opération de variable d'état en utilisant : 1) une variable d'état stockée qui a été stockée dans le compartiment dendritique (200, 200', A, B) préalablement à la réception de l'entrée synaptique, et 2) l'entrée synaptique, de manière à produire un résultat de variable d'état ;
c) réaliser une opération de jointure en utilisant : 1) le résultat de variable d'état, 2) une entrée d'une variable d'état provenant d'un autre compartiment (200, 200', A, B) qui a été précédemment pris en charge, et 3) une configuration d'opération de jointure qui est stockée dans le compartiment dendritique (200, 200', A, B) ou qui lui est associée, de manière à produire un résultat d'opération de jointure ; et
d) produire une sortie de variable d'état sur la base de l'opération de jointure ;

le circuit de cœur neuronal étant configuré en outre pour
prendre en charge au moins deux des compartiments dendritiques (200, 200', A, B) qui sont agencés dans une arborescence dendritique hiérarchique, et
produire un événement de génération de spike à partir uniquement du compartiment dendritique le plus élevé à la racine de l'arborescence dendritique hiérarchique ; et

chaque compartiment dendritique (200, 200', A, B) de la pluralité de compartiments dendritiques (200, 200', A, B) comprenant une pile (340) implémentée au moyen de circuits électroniques et de bits de configuration codant une sémantique de pile.

**2.** Circuit selon la revendication 1, lequel circuit de cœur neuronal est configuré en outre pour produire une sortie liée à un spike si le résultat d'opération de jointure atteint un seuil de génération de spike.

**3.** Circuit selon la revendication 2, dans lequel la sortie liée à un spike est un événement de spike effectif.

**4.** Circuit selon la revendication 2, dans lequel la sortie liée à un spike est une valeur d'état de génération de spike uniquement, laquelle fait partie de la sortie de variable d'état.

**5.** Circuit selon la revendication 1, dans lequel :

l'opération de jointure comporte une opération de pile consistant à communiquer des variables d'état depuis un compartiment dendritique (200, 200', A, B) vers un compartiment dendritique (200, 200', A, B) différent.

**6.** Circuit selon la revendication 5, dans lequel :

les opérations de pile comportent l'empilement et le dépilement ; et
lequel circuit de cœur neuronal est configuré en outre pour dépiler, à partir de la pile (340), une entrée de la variable d'état provenant de l'autre compartiment (200, 200', A, B), et pour empiler la sortie de variable d'état dans la pile (340).

**7.** Circuit selon la revendication 1, dans lequel les opérations comportent des opérations de pile, l'opération de jointure, des opérations de seuil, des opérations de potentiel d'action rétrograde (bAP), des opérations mathématiques et des opérations de logique booléenne.

**8.** Circuit selon la revendication 1, lequel circuit de cœur neuronal est configuré en outre, à l'issue de l'opération (d) pour un premier compartiment dendritique (200, 200', A, B), pour réaliser les opérations (a)-(d) pour un deuxième compartiment dendritique (200, 200', A, B), au moins une sortie de variable du premier compartiment dendritique (200, 200', A, B) étant au moins une des variables provenant de l'autre compartiment (200, 200', A, B) dans le deuxième compartiment dendritique (200, 200', A, B).

**9.** Procédé exécuté par un processeur d'un circuit électronique de cœur neuronal, le circuit de cœur neuronal comprenant une pluralité de compartiments dendritiques (200, 200', A, B) qui sont collectivement pris en charge au fil du temps pour développer des états de compartiment respectifs, chaque prise en charge correspondant à un pas de temps neuromorphique et chaque compartiment comprenant une variable d'état représentant un état du compartiment dendritique (200, 200', A, B) ; et le circuit de cœur neuronal étant configuré pour

prendre en charge au moins deux des compartiments dendritiques (200, 200', A, B) qui sont agencés dans une arborescence dendritique hiérarchique, et
produire un événement de génération de spike à partir uniquement du compartiment dendritique le plus élevé à la racine de l'arborescence dendritique hiérarchique ; et
chaque compartiment dendritique (200, 200', A, B) de la pluralité de compartiments dendritiques (200, 200', A, B) comprenant une pile (340) implémentée au moyen de circuits électroniques et de bits de configuration codant une sémantique de pile ;
le procédé comprenant :

durant un pas de temps neuromorphique :

a) la réception d'une entrée synaptique au niveau d'un compartiment dendritique (200, 200', A, B) ;
b) la réalisation d'une opération de variable d'état utilisant : 1) une variable d'état stockée qui a été stockée dans le compartiment dendritique (200, 200', A, B) préalablement à la réception de l'entrée synaptique, et 2) l'entrée synaptique, de manière à produire un résultat de variable d'état ;
c) la réalisation d'une opération de jointure utilisant : 1) le premier résultat de variable d'état, 2) une entrée d'une première variable d'état provenant d'un autre compartiment (200, 200', A, B) qui a été précédemment pris en charge, et 3) une configuration d'opération de jointure qui est stockée dans le compartiment dendritique (200, 200', A, B) ou qui lui est associée, de manière à produire un premier résultat d'opération de jointure ; et

d) la production d'une sortie de variable d'état sur la base de l'opération de jointure.

10. Procédé selon la revendication 9, comprenant en outre la communication de variables d'état depuis un compartiment dendritique (200, 200', A, B) vers un compartiment dendritique (200, 200', A, B) différent au moyen d'une opération de pile dans l'opération de jointure.

11. Procédé selon la revendication 10, comprenant en outre le dépilement, à partir de la pile (340), d'une entrée de la variable d'état provenant de l'autre compartiment (200, 200', A, B), et l'empilement de la sortie de variable d'état dans la pile (340).

12. Procédé selon la revendication 9, dans lequel les opérations comportent des opérations de pile, l'opération de jointure, des opérations de seuil, des opérations de potentiel d'action rétrograde (bAP), des opérations mathématiques et des opérations de logique booléenne.

13. Procédé selon la revendication 9, comprenant en outre :

l'exécution au travers d'une arborescence dendritique hiérarchique à partir du compartiment dendritique (200, 200', A, B) en cours de traitement ; et

la production d'un événement de génération de spike à partir uniquement de la valeur du niveau le plus élevé.

14. Support (s) lisible (s) par machine comportant des instructions qui, lorsqu'elles sont exécutées par un processeur d'un circuit électronique de cœur neuronal, amènent le processeur à réaliser l'un quelconque des procédés selon les revendications 9 à 13 ;

le circuit de cœur neuronal comprenant une pluralité de compartiments dendritiques (200, 200', A, B) qui sont collectivement pris en charge au fil du temps pour développer des états de compartiment respectifs,

chaque prise en charge correspondant à un pas de temps neuromorphique et chaque compartiment comprenant une variable d'état représentant un état du compartiment dendritique (200, 200', A, B) ; et

le circuit de cœur neuronal étant configuré pour prendre en charge au moins deux des compartiments dendritiques (200, 200', A, B) qui sont agencés dans une arborescence dendritique hiérarchique, et

produire un événement de génération de spike à partir uniquement du compartiment dendritique le plus élevé à la racine de l'arborescence dendritique hiérarchique ; et

chaque compartiment dendritique (200, 200', A, B) de la pluralité de compartiments dendritiques (200, 200', A, B) comprenant une pile (340) implémentée au moyen de circuits électroniques et de bits de configuration codant une sémantique de pile.

FIG. 1A

*FIG. 1B*

*FIG. 1C*

*FIG. 2A*

*FIG. 2B*

EP 3 340 127 B1

*FIG. 2C*

*FIG. 3A*

FROM
DENDRIT
EACCUM

110

OUTPUT FROM
DENDRITE $\delta_i$

250

250

250

340

PUSH Y OUTPUT TO
STACK

$\delta_i$

200

155

OPTIONAL SPIKE OUTPUT

POP A AND/OR B VALUES
FROM COMPARTMENT
STACK

340

INPUT FROM PRIOR
DENDRITES $\Delta_J$, J<I

240

*FIG. 3B*

350

STACKIN = POP2      THRESHOP  = SPIKE
STACKOUT= SKIP      BAP_SRC   = 0X1
JOINOP  = ADD_U     BAP_ACTION = 0X3

STACKIN = POP       THRESHOP  = EVAL
STACKOUT= PUSH      BAP_SRC   = 0X0
JOINOP  = ADD_U     BAP_ACTION = 0X3

STACKIN = NOP       THRESHOP  = EVAL
STACKOUT= PUSH      BAP_SRC   = 0X0
JOINOP  = NOP       BAP_ACTION = 0X3

*FIG. 3C*

350

SPIKE OUTPUT TO
AXON_MAP

*FIG. 3D*

400

410 — RECEIVE SYNAPTIC INPUT

420 — PERFORM FIRST STATE VARIABLE OPERATION

430 — PERFORM FIRST JOIN OPERATION WITH OTHER COMPARTMENT VARIABLES

440 — PERFORM SECOND STATE VARIABLE OPERATION

450 — PERFORM SECOND JOIN OPERATION WITH OTHER COMPARTMENT VARIABLES

460 — PRODUCE STATE VARIABLE OUTPUT

*FIG. 4*

5000

5002 — PROCESSOR
5024 — INSTRUCTIONS

VIDEO DISPLAY — 5010

5004 — MAIN MEMORY
5024 — INSTRUCTIONS

ALPHA-NUMERIC INPUT DEVICE — 5012

5006 — STATIC MEMORY

U/I NAVIGATION DEVICE — 5014

5020 — NETWORK INTERFACE DEVICE

INTERLINK

DRIVE UNIT
MACHINE READABLE MEDIUM — 5016 / 5022
INSTRUCTIONS — 5024

5026 — NETWORK

SIGNAL GENERATION DEVICE — 5018

5021 — SENSORS

OUTPUT CONTROLLER — 5028

**FIG. 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- The Leaky Integrate-and-Fire Neuron: A Platform for Synaptic Model Exploration on the SpiNNaker Chip. **RAST et al.** 2010 International Joint Conference on Neural Networks (IJCNN). IEEE, 18 July 2010